# DEMANDE DE BREVET EUROPEEN

(11) **EP 2 448 218 A1**
(43) Date de publication de la demande: **02.05.2012**
(21) Numéro de dépôt: 10306095.0
(22) Date de dépôt: 07.10.2010
(51) Int. Cl.: H04L 29/08, G06F 17/30, G06F 9/50

(54) **Procédé de présentation de services sur un écran d'un terminal**

(71) Demandeur: Gemalto SA, 92190 Meudon (FR)
(72) Inventeur: Buton, Christophe, 13042, GEMENOS (FR)

(57) **Abrégé**

L'invention concerne un procédé de présentation de services sur un écran 3 d'un premier dispositif 2, les services étant fournis par un second dispositif 6 communiquant avec le premier dispositif 2.

Selon l'invention, le procédé consiste à :
- transmettre une demande, du second dispositif 6 au premier dispositif 2, des capacités d'exécution logicielles et matérielles du premier dispositif 2;
- transmettre les capacités d'exécution du premier dispositif 2 au second dispositif 6 ;
- ne présenter du second dispositif 6 au premier dispositif 2 qu'une liste des services pouvant être exécutés par le second dispositif 6, en fonction des capacités d'exécution du premier dispositif 2 ;
- présenter les services sur l'écran 3 du premier dispositif 2.

## Description

Le domaine de l'invention est celui des télécommunications et concerne notamment un procédé de présentation de services sur un écran d'un terminal, par exemple sur un écran d'un ordinateur ou d'un téléphone portable.

Dans la suite de cette description, on entend par « service » une application (programme) permettant à l'utilisateur du terminal d'accéder à une fonctionnalité qui lui est offerte par un dispositif qui communique avec ce terminal. La communication entre le terminal et le dispositif peut être filaire ou non et le dispositif contient une ou plusieurs applications pouvant être mises en oeuvre par le terminal.

A titre d'exemple, une clé USB contenant un générateur d'OTP (« One Time Password » en anglais - « mot de passe unique » en français) peut être insérée dans une prise USB prévue à cet effet sur un ordinateur portable. L'écran de l'ordinateur affiche une icône indiquant à l'utilisateur que la clé USB est bien connectée et opérationnelle. Un clic à l'aide d'une souris sur cette icône génère la transmission du mot de passe de la clé vers l'ordinateur. A l'aide de ce mot de passe, l'utilisateur de l'ordinateur peut alors avoir accès à un compte bancaire.

Un autre exemple peut être donné dans le domaine UPnP : dans le domaine des réseaux de télécommunication, des terminaux communiquent via le protocole UPnP défini par l'UPnP Forum. Il peut s'agir par exemple d'un réseau domestique (en anglais "home network"), ou d'un réseau local, de type Intranet ou autre.

De façon connue, ce protocole vise à permettre l'interopérabilité et l'interconnexion d'équipements multimédia, sans configuration par l'utilisateur. Dans la suite de la description, on parlera de réseau UPnP pour désigner un ensemble d'équipements interconnectés entre eux par réseau et utilisant le protocole UPnP pour communiquer entre eux à travers ce réseau.

Un dispositif est dit dispositif UPnP s'il est conforme au standard UPnP ou à un autre standard équivalent ou dérivé, notamment s'il utilise un protocole de commande conforme à un tel standard.

On distingue généralement, dans les architectures UPnP, différents types de dispositifs UPnP: les dispositifs de contrôle DMC (Digital Media Controller), les serveurs de contenu DMS (Digital Media Server) et les dispositifs de restitution de contenu DMR (Digital Media Renderer), DMA (Digital Media Adapter) et DMP (Digital Media Player). Dans un réseau UPnP, le dispositif de contrôle DMC a un rôle central en ce qu'il permet de découvrir les autres dispositifs UPnP du réseau, les services offerts par ces dispositifs, et la mise en relation d'un serveur de contenus DMS avec un dispositif de restitution DMR, DMA ou dispositif de lecture DMP pour que ce dispositif de restitution restitue un contenu multimédia indexé par ce serveur de contenus DMS.

Historiquement, les contenus multimédia manipulés dans les réseaux UPnP étaient des contenus locaux au réseau domestique. Maintenant, certains serveurs de contenu DMS permettent également d'indexer des contenus accessibles en ligne, par exemple sur le réseau Internet, et de les rendre disponibles dans le réseau domestique UPnP. Ainsi, un utilisateur peut visualiser des photos stockées sur un service de partage de photos en ligne en utilisant un dispositif de restitution DMR.

L'architecture UPnP supporte la zéro configuration, le « réseau invisible » et la découverte automatique pour plusieurs catégories de périphériques. Chaque périphérique peut joindre dynamiquement un réseau, obtenir une adresse IP, annoncer son nom, préciser ses possibilités sur simple demande et interroger les autres périphériques sur leur présence et leurs capacités. Les serveurs DHCP et DNS sont facultatifs et ne sont utilisés que s'ils sont présents sur le réseau. Les périphériques peuvent se déconnecter du réseau automatiquement sans laisser d'informations erronées.

La base d'un réseau UPnP est l'adressage IP. Chaque périphérique doit avoir un client DHCP et rechercher un serveur DHCP quand il est connecté pour la première fois au réseau. Si aucun serveur DHCP n'est disponible, c'est-à-dire que le réseau n'est pas géré, le périphérique s'assigne lui-même une adresse. Si durant les transactions DHCP, le périphérique obtient un nom de domaine, par exemple par un serveur DNS, le périphérique devrait utiliser ce nom pour chaque opération réseau sinon il doit utiliser son adresse IP.

Le protocole de gestion d'un réseau UPnP est constitué de quatre étapes successives : une étape de découverte de services, une étape de description, une étape de contrôle, une étape de notification d'évènements et une étape de présentation.

Lors de l'étape de découverte de services, pour une adresse IP donnée, lorsqu'un périphérique est connecté au réseau, le protocole de découverte d'UPnP permet à ce dispositif de prévenir les points de contrôle du réseau des services qu'il peut offrir. Parallèlement, quand un point de contrôle est connecté au réseau, le protocole de découverte permet à ce point de contrôle de rechercher les dispositifs intéressants sur le réseau. Les échanges fondamentaux dans ces deux cas, sont des messages contenants les informations spécifiques essentielles sur le dispositif et un de ses services, comme, par exemple, son type, son identifiant ou un pointeur vers des informations plus détaillées. Le protocole de découverte UPnP est basé sur SSDP.

L'étape suivante dans un réseau UPnP est la description. Quand un point de contrôle a découvert un dispositif, il ne connaît de lui que peu d'informations. Pour qu'un point de contrôle puisse en apprendre davantage sur le dispositif et ses possibilités, ou pour interagir avec celui-ci, il doit récupérer la description du dispositif depuis l'URL fournie par celui-ci dans le message de découverte. La description UPnP d'un dispositif est exprimée en XML et comprend des informations spécifiques au fournisseur du dispositif comme le nom du modèle, le numéro de série ou le nom du fournisseur, des URL vers les sites web des fournisseurs. Ces descriptions incluent également une liste des dispositifs embarqués ou services ainsi que les URL pour les commandes, les contrôles ou les présentations. Pour chaque service, la description inclut une liste de commandes ou d'actions auxquelles le service répond et les paramètres ou arguments pour chacune de ces actions. La description de service inclut également la liste des variables décrivant l'état de ce service pendant son exécution en termes de types de données, de plage de valeurs ou de caractéristiques d'évènements.

L'étape suivante est le contrôle. Après qu'un point de contrôle ait reçu une description du dispositif, celui-ci peut envoyer des actions au service d'un dispositif. Pour cela, un point de contrôle envoie un message de contrôle approprié à l'URL de contrôle du service (fournie par la description du dispositif). Les messages de contrôle sont également décrits en XML en utilisant SOAP. Comme tout appel de fonction, en réponse aux messages de contrôle, les services renvoient des valeurs spécifiques aux actions. Les effets de ces actions, le cas échéant, sont visibles par le changement des variables qui décrivent l'état d'exécution du service.

Après le contrôle vient la notification d'évènement. Une description de service UPnP inclut une liste d'actions auxquelles le service répond et une liste des variables qui caractérisent le service à l'exécution. Quand ses variables changent, le service publie des mises à jour. Les mises à jour sont des messages XML de type GENA contenant le nom des variables et leurs valeurs. Les points de contrôles peuvent s'abonner pour les recevoir. Un message initial particulier est envoyé quand un point de contrôle s'inscrit, ce message contient les noms et les valeurs de toutes les variables pour permettre à l'abonné de s'initialiser. Pour supporter les scénarios de réseaux à plusieurs points de contrôle, la notification est prévue pour que tous les points de contrôles soient informés uniformément des effets de chaque action. En conséquence, tout abonné reçoit des messages d'évènements pour toutes les variables « notifiantes » qui ont changé et des messages d'événements sont envoyés, quelle que soit la raison pour laquelle l'état de la variable a changé (que le changement soit le résultat d'une action ou parce que l'état du service a changé).

Enfin, la dernière étape d'un réseau UPnP est la présentation. Si un dispositif a une URL de présentation, un point de contrôle peut recevoir une page depuis cette URL, charger la page dans un navigateur web et, selon les capacités de la page, permettre à un utilisateur de contrôler le dispositif et/ou de voir l'état d'un dispositif. Les possibilités d'une telle page peuvent changer en fonction des capacités du périphérique qui présente la page à l'utilisateur.

L'inconvénient des réseaux UPnP et plus généralement de tout réseau de fourniture de services faisant appel à un dispositif, appelé premier dispositif, les services étant fournis par un second dispositif communiquant avec ledit premier dispositif, est que le premier dispositif ne dispose en général que d'une interface homme-machine limitée à la taille de l'écran de ce premier dispositif. Le second dispositif peut être capable de fournir plus de services que le premier n'est en réalité capable d'exploiter. A titre d'exemple, le second dispositif peut être en mesure de permettre la lecture de films, alors que le premier dispositif ne dispose pas de logiciel permettant la lecture de ces films. Proposer, par exemple par l'affichage d'une icône sur l'écran du premier dispositif, la lecture de ces films n'est d'aucune utilité puisque l'utilisateur ne pourra en aucune façon visualiser des films sur ce premier dispositif. Cet icône ne sera donc d'aucune utilité pour l'utilisateur et ne viendra que « polluer » son écran, puisqu'il propose un service indisponible.

Cet inconvénient est d'autant plus grave que l'écran du premier dispositif est de taille réduite, par exemple lorsqu'il s'agit d'un écran d'un téléphone portable ou d'un notebook.

La présente invention a notamment pour objectif de remédier à cet inconvénient.

A cet effet, la présente invention propose un procédé de présentation de services sur un écran d'un premier dispositif, ces services étant fournis par au moins un second dispositif communiquant avec le premier dispositif, le procédé consistant à:
- transmettre une demande, du second dispositif au premier dispositif, des capacités d'exécution logicielles et matérielles du premier dispositif ;
- transmettre les capacités d'exécution du premier dispositif au second dispositif ;
- ne présenter du second dispositif au premier dispositif qu'une liste des services pouvant être exécutés par le second dispositif, en fonction des capacités d'exécution du premier dispositif ;
- présenter les services sur l'écran du premier dispositif.

Ainsi, seuls les services (fournis par le second dispositif) pouvant réellement être exécutés par le premier dispositif, en fonction de ses capacités d'exécution logicielles et matérielles du premier dispositif, seront affichés sur l'écran du premier dispositif.

Dans un mode de mise en oeuvre préférentiel, le procédé selon l'invention consiste également à ne présenter sur l'écran que les services auxquels l'utilisateur du premier dispositif a un droit d'accès, ces droits d'accès étant définis dans le premier dispositif.

Il est également possible de ne présenter sur l'écran que les services pour lesquels l'utilisateur du premier dispositif a exprimé une préférence dans le premier dispositif.

Avantageusement, le premier dispositif est un terminal portable, par exemple un ordinateur portable ou un téléphone portable.

L'invention s'applique préférentiellement dans le cadre d'un réseau UPnP où les premier et second dispositifs sont de type UPnP.

L'invention sera mieux comprise à la lecture de la description suivante d'un mode de mise en oeuvre préférentiel, donné à titre illustratif et non limitatif, et des dessins annexés, dans lesquels :
- la figure 1 représente un réseau UPnP où un point de contrôle constitué par un ordinateur portable communique avec deux seconds dispositifs aptes à lui fournir des services.
- la figure 2 est un organigramme représentant les différentes étapes de ce mode de mise en oeuvre préférentiel, dans le cadre d'un réseau UPnP.

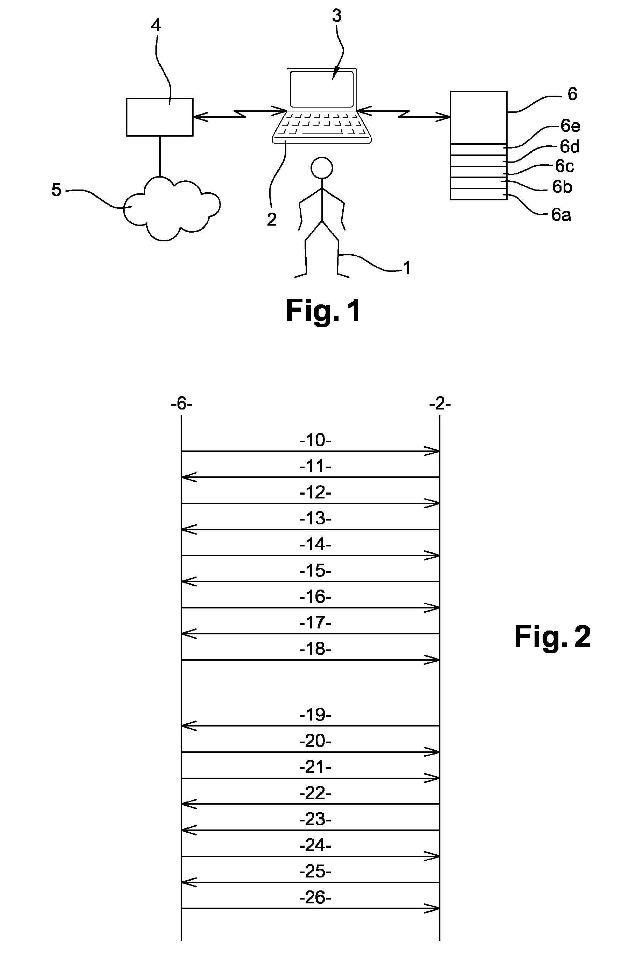

La figure 1 représente un réseau UPnP où un point de contrôle constitué par un ordinateur portable communique avec deux seconds dispositifs aptes à lui fournir des services.

Un utilisateur 1, appelé Christophe Martin, dispose d'un ordinateur portable 2 ayant un écran 3. Selon un mode d'utilisation particulier, l'utilisateur 1 arrive à son domicile et allume son ordinateur 2 constituant un point de contrôle avec son login "cmartin". Il n'active pas la connexion Wifi de sa Freebox^{tm} 4 et n'est donc pas connecté au réseau Internet 5.

Un dispositif appelé « serveur familial » 6 est automatiquement détecté par l'ordinateur 2 grâce au protocole UPnP (par liaison filaire ou sans fil) et certains icônes/widgets s'affichent sur l'écran 3 de son ordinateur 2 pour donner à l'utilisateur 1 l'accès à des fonctionnalités offertes par le « serveur familial » 6 :
- Un serveur de medias 6a permettant de visualiser des films et d'écouter de la musique ;
- Un logiciel de signature 6b apparaît dans sa messagerie ;
- Une base de données "glucomètre" 6c pour qu'il puisse assurer un suivi de ses mesures de glucose.

L'utilisateur 1 désire maintenant se connecter au Internet 5 et active pour cela la connexion Wifi de sa Freebox^{tm} 4 ou de son ordinateur portable 2. Une fois la connexion établie, l'ordinateur 2 est relié à Internet 5. L'ordinateur 2 envoie alors un signal par le protocole UPnP au serveur familial 6 pour l'informer qu'un évènement s'est produit (l'établissement d'une connexion Internet).

Un échange de données entre l'ordinateur 2 et le serveur familial 6 est alors entrepris pour que s'affichent sur l'écran 3 des icônes/widgets relatifs à des services Internet (au sens large du terme) disponibles au niveau du serveur 6.

A titre d'exemple :
- Une connexion 6d à un serveur bancaire pour gérer un compte bancaire ;
- Une connexion 6e à un serveur médical dédié au relevé de glucose pour la mise à jour, l'échange d'informations et l'accès aux données historiques.

La figure 2 est un organigramme représentant les différentes étapes de ce mode de mise en oeuvre préférentiel, dans le cadre d'un réseau UPnP.

On se mettra ici dans le cadre d'un point de contrôle constitué par un ordinateur tel que 2 dialoguant selon le protocole UPnP avec un dispositif tel que 6 constitué par un serveur familial.

Le serveur familial 6, disposant d'un nom, d'un identifiant,... fournit un certain nombre de services :
- Un serveur multimédia (nécessite un lecteur multimedia pour fonctionner, par exemple Windows Media Player^{tm} et aucun droit spécifique n'est requis c'est-à-dire que tous les utilisateurs sont autorisés à utiliser le serveur multimédia) ;
- Un accès à un premier compte bancaire (nécessite une connexion Internet et seul l'utilisateur « cmartin » est autorisé à accéder à ce compte) ;
- Un accès à un second compte bancaire (nécessite une connexion Internet et seul l'utilisatrice « smartin » est autorisée à accéder à ce compte) - « s » correspondant à Sophie, l'épouse de Christophe ;
- Des certificats de signature de messages (utilisés par un programme de messagerie électronique tel qu'Outlook^{tm}, seul l'utilisateur « cmartin » étant autorisé à signer des messages) ;
- Une base de données de glycémie (à laquelle seul « cmartin » est autorisé à accéder), nécessitant un navigateur Internet pour l'affichage ainsi qu'une connexion Internet pour la mise à jour du serveur médical, l'échange d'informations et l'accès aux données historiques.

A l'étape 10, le serveur familial 6 rejoint le réseau pour l'avertir de sa présence. A l'étape 11, le point de contrôle 2 envoie au dispositif une requête de description du serveur familial 6. A l'étape 12, le serveur familial 6 demande au point de contrôle ses droits d'accès. Le point de contrôle répond à l'étape 13 en lui transmettant son login, par exemple « cmartin » ou un code PIN. Le serveur familial 6 demande alors au point de contrôle 2, selon l'invention et lors d'une étape 14, quelles sont ses capacités d'exécution logicielles et matérielles. Le point de contrôle 2 renvoie alors, lors d'une étape 15, les informations suivantes :
- mes capacités d'exécution logicielles sont : un lecteur multimédia, un navigateur Internet, un logiciel de lecture de documents pdf et un programme de messagerie électronique ;
- mes capacités d'exécution matérielles sont : un moyen d'affichage, un accéléromètre, un écran tactile et un capteur biométrique.

A l'étape 16, le serveur familial 6 envoie au point de contrôle 2 une description des fonctionnalités qu'il peut apporter au point de contrôle 2, en fonction des données précédemment reçues à l'étape 15, à savoir :
- un serveur multimédia (lecteur multimédia et aucune restriction d'accès)
- un certificat de signature de messages (messagerie électronique et droits limités à « cmartin »)
- une base de données de glycémie (navigateur Internet et droits limités à « cmartin »).

Il est à noter ici que les fonctionnalités suivantes sont omises :
- Un accès au premier compte bancaire (il n'y a pas de connexion Internet) ;
- Un accès au second compte bancaire (il n'y a pas de connexion Internet et seule l'utilisatrice« smartin » a des droits d'accès à ce second compte).

Lors d'une étape 17, le point de contrôle 2 renvoie alors une demande de description plus précise de ces fonctionnalités. Le serveur familial 6 répond à l'étape 18 par:
- je dispose d'un serveur multimédia permettant :
   - d'afficher une liste de lecture
   - de lire des fichiers
   - d'ajouter des fichiers
- je dispose d'un certificat de signature permettant :
   - de signer des messages électroniques
   - de ne pas signer des messages électroniques
- je dispose d'une base de données de glycémie permettant :
   - d'afficher des données sous forme de graphiques
   - d'afficher des données sous forme de chiffres
   - d'ajouter des informations complémentaires aux données

Il est à noter que l'accès au serveur médical est omis car il n'y a pas de connexion Internet disponible.

Imaginons maintenant que Christophe Martin active sa connexion Wifi et qu'une connexion Internet est dorénavant disponible. Il est dès lors nécessaire d'informer le serveur familial 6 de ce changement car d'autres services sont maintenant disponibles comme il est décrit ci-dessous.

Lors d'une étape 19, le point de contrôle 2 envoie une notification au serveur familial 6 pour lui signaler un changement. Le serveur familial 6 lui répond lors d'une étape 20 par une requête sur l'origine de ce changement, ainsi que, lors d'une étape 21, par une requête des ressources disponibles.

Lors d'une étape 22, le point de contrôle 2 répond par :
- mes capacités d'exécution logicielles sont : un lecteur multimédia, un navigateur Internet, un logiciel de lecture de documents de type pdf et un programme de messagerie électronique ;
- mes capacités d'exécution matérielles sont : un accès à Internet (et éventuellement la bande passante disponible), un moyen d'affichage, un accéléromètre, un écran tactile et un capteur biométrique.

Il est à noter que, par rapport à la description des fonctionnalités préalable, l'accès à Internet a été rajouté.

Lors d'une étape 23, le point de contrôle 2 demande au serveur familial 6 une description de ses fonctionnalités et le serveur familial 6 lui répond, lors d'une étape 24 par :
- un serveur multimédia (lecteur multimédia et aucune restriction d'accès) ;
- un certificat de signature de messages (messagerie électronique et droits limités à « cmartin ») ;
- un accès à un premier compte bancaire (nécessite une connexion Internet et seul l'utilisateur « cmartin » est autorisé à accéder à ce compte) ;
- une base de données de glycémie (navigateur Internet et droits limités à « cmartin ») ;
- une mise à jour d'un serveur médical, l'échange d'informations et l'accès aux données (nécessite une connexion Internet et seul « cmartin » est autorisé à y accéder).

Il est à noter que l'accès au second compte bancaire est omis car l'utilisateur « cmartin » n'a pas de droit d'accès à ce second compte bancaire (accès réservé à « smartin »).

A l'étape 25, le point de contrôle 2 demande au serveur familial 6 une description plus précise des services offerts. Ce dernier lui répond lors d'une étape 26 par :
- je dispose d'un serveur multimédia permettant :
   - d'afficher une liste de lecture
   - de lire des fichiers
   - d'ajouter des fichiers
- je dispose d'un certificat de signature permettant :
   - de signer des messages électroniques
   - de ne pas signer des messages électroniques
- je dispose d'un accès au premier compte bancaire
- je dispose d'une base de données de glycémie permettant :
   - d'afficher des données sous forme de graphiques
   - d'afficher des données sous forme de chiffres
   - d'ajouter des informations complémentaires aux données
- je dispose d'un accès à un serveur de glycémie permettant :
   - de synchroniser des données.

Les icônes/widgets correspondant à ces services sont alors affichés sur l'écran 3 du point de contrôle 2.

La description précédente a été faite dans le cadre d'ajout de services ou de fonctionnalités (en l'occurrence une connexion à Internet) mais l'invention s'applique également à la suppression de services ou de fonctionnalités. Ainsi, si par exemple la connexion Internet vient à être coupée (suite à une panne ou la désactivation de la liaison Wifi), les échanges précédents mettront en évidence la suppression de cette connexion Internet et on reviendra à la situation correspondant à la fin de l'exécution de l'étape 18.

La présente invention permet donc de n'afficher sur l'écran d'un point de contrôle que les services pouvant être effectivement fournis par un second dispositif auquel est connecté (par liaison filaire ou sans fil) ce point de contrôle. On limite ainsi la présentation des services à ceux qui sont effectivement disponibles.

Dans un mode de mise en oeuvre particulier, seuls les services pour lesquels l'utilisateur 1 de l'ordinateur 2 a exprimé une préférence (ces services préférés étant enregistrés en tant que services préférés dans l'ordinateur 2) sont affichés sur l'écran 3. Ceci permet à l'utilisateur 1 de personnaliser son ordinateur 2 en filtrant les services auxquels il ne souhaite pas accéder.

Bien entendu, l'invention n'est pas limitée à UPnP et s'applique à tout dispositif fournisseur de services (tel qu'une clé USB, un lecteur biométrique, une carte à puce,...) apte à fournir des services à un autre dispositif disposant d'un écran. A cet égard, l'invention peut se présenter sous la forme d'un logiciel directement installé au niveau du système d'exploitation de l'ordinateur ou alors sous la forme d'une application que l'on viendrait installer sur un ordinateur.

Dans le cas d'une application, celle-ci est destinée à coopérer avec un pilote du dispositif proposant des services. Ce dispositif est par exemple une clé USB à enficher dans un port USB de l'ordinateur. Le pilote permet à l'ordinateur de dialoguer avec la clé USB et l'application installée sur l'ordinateur récupère la liste des services proposés par la clé via le pilote. L'application peut par exemple récupérer tous les services proposés par la clé et filtrer leur affichage sur l'écran de l'ordinateur en fonction des capacités matérielles et logicielles de cet ordinateur. L'application est également chargée de détecter les changements intervenus au niveau de l'ordinateur, comme montré plus haut (la détection d'une connexion à Internet).

L'application peut dialoguer avec le dispositif selon tout protocole ad hoc, et notamment selon le protocole UPnP.

## Revendications

1. Procédé de présentation de services sur un écran (3) d'un premier dispositif (2), lesdits services étant fournis par au moins un second dispositif (6) communiquant avec ledit premier dispositif (2), **caractérisé en ce qu'**il consiste à :
- transmettre une demande, dudit second dispositif (6) audit premier dispositif (2), des capacités d'exécution logicielles et matérielles dudit premier dispositif (2);
- transmettre lesdites capacités d'exécution dudit premier dispositif (2) audit second dispositif (6) ;
- ne présenter dudit second dispositif (6) audit premier dispositif (2) qu'une liste des services pouvant être exécutés par ledit second dispositif (6), en fonction des capacités d'exécution dudit premier dispositif (2) ;
- présenter lesdits services sur ledit écran (3) dudit premier dispositif (2).

2. Procédé selon la revendication 1, **caractérisé en ce qu'**il consiste également à ne présenter sur ledit écran (3) que les services auxquels l'utilisateur (1) dudit premier dispositif (2) a un droit d'accès, lesdits droits d'accès étant définis dans ledit premier dispositif (2).

3. Procédé selon la revendication 1, **caractérisé en ce qu'**il consiste également à ne présenter sur ledit écran (3) que les services pour lesquels l'utilisateur (1) dudit premier dispositif (2) a exprimé une préférence dans ledit premier dispositif (2).

4. Procédé selon l'une des revendications 1 à 3, **caractérisé en ce que** ledit premier dispositif (2) est un terminal portable.

5. Procédé selon l'une des revendications 1 à 4, **caractérisé en ce que** ledit premier dispositif (2) est un ordinateur portable.

6. Procédé selon l'une des revendications 1 à 4, **caractérisé en ce que** ledit premier dispositif (2) est un téléphone portable.

7. Procédé selon l'une des revendications 1 à 6, **caractérisé en ce que** lesdits premier et second dispositifs sont de type UPnP.
